# FASCICULE DE BREVET EUROPEEN

(11) **EP 2 804 810 B1**
(45) Date de publication et mention de la délivrance du brevet: **09.03.2016**
(21) Numéro de dépôt: 12819083.2
(22) Date de dépôt: 18.12.2012
(51) Int. Cl.: B64C 1/00

(54) **ELÉMENT DE STRUCTURE DE FUSELAGE D'AÉRONEF ANTI DÉVERSEMENT**
STRUKTURELEMENT FÜR EINEN FLUGZEUGRUMPF ZUR VERHINDERUNG VON LATERAL-TORSIONALEM KNICKEN
STRUCTURAL ELEMENT FOR AN AIRCRAFT FUSELAGE THAT PREVENTS LATERAL-TORSIONAL BUCKLING

(30) Priorité: 21.12.2011 FR 1162136
(43) Date de publication de la demande: 26.11.2014
(73) Titulaire: Airbus Operations S.A.S., 31060 Toulouse (FR); Airbus Operations GmbH, 21129 Hamburg (DE)
(72) Inventeur: ALBY, Sébastien, F-31170 Tournefeuille (FR); GIUSEPPIN, Laurent, F-82700 Finhan (FR); MÜLLER, Markus, 88045 Friedrichshafen (DE)
(74) Mandataire: Santarelli
(86) Numéro de dépôt international: PCT/FR2012/052969
(87) Numéro de publication internationale: WO 2013/093323

(56) Documents cités:
- US-A1- 2010 272 954
- US-A1- 2011 011 980
- US-B2- 7 716 835

## Description

L'invention est relative à une structure mécanique, plus particulièrement à une structure de fuselage d'aéronef.

De manière générale, les structures de fuselage d'aéronef sont composées d'une peau à laquelle sont fixés des raidisseurs ou cadres, soit directement (cadres intégraux) soit par l'intermédiaire de cornières (« clips » en terminologie anglo-saxonne). Ces cadres sont habituellement composés de cerceaux métalliques ou composite à section en I ou en Z ou en C. Ces structures comprennent en outre des lisses disposées perpendiculairement aux cadres.

Des pièces appelées stabilisateurs (« cleats » en terminologie anglo-saxonne) sont utilisées pour relier les cadres aux lisses, en particulier pour empêcher les cadres de fléchir, par déversement, lorsqu'ils sont sollicités mécaniquement.

Le document US 2010 272954, qui décrit les caractéristiques du préambule de la revendication 1, est considéré comme l'état de la technique le plus proche.

On connaît par le document WO 2009/037006 un composant structurel pour fuselage d'engin aéronautique comprenant un profilé creux et un support de ce profilé comprenant une jambe par lequel le composant est fixé à la peau.

Le support présenté dans ce document reprend la fonction des cornières et des stabilisateurs et chacun d'entre eux est placé entre chaque lisse sur toute la longueur du profilé.

Dans ce document et dans les autres structures de l'art antérieur, la multiplicité des pièces nécessaires à la tenue mécanique de la structure et la complexité de leur forme induisent des coûts importants. En outre, l'assemblage des cornières et des stabilisateurs sur le panneau entre chaque lisse est une opération complexe et longue du fait des ajustements qu'elle requiert, en particulier compte tenu des tolérances à respecter.

L'invention propose de remédier à au moins un des inconvénients ci-dessus.

A cet effet, elle concerne un élément de structure de fuselage d'aéronef, l'élément de structure ayant une forme générale de profilé allongé suivant une direction longitudinale et comprend deux ailes, chaque aile comprenant une partie s'étendant de manière ininterrompue sur toute la longueur du profilé et des jambes espacées les unes des autres qui s'étendent à partir de cette partie ininterrompue de manière à définir une ouverture entre deux jambes consécutives, l'une des jambes d'une aile étant disposée en vis-à-vis d'au moins une partie de l'ouverture définie entre deux jambes consécutives de l'autre aile.

Ainsi, l'invention permet de simplifier l'architecture d'une structure de ce type en réduisant le nombre de pièces mises en jeu. De cette façon, les temps et les coûts de fabrication associés sont réduits, de même que ceux de l'assemblage. La réduction du nombre de pièces et d'éléments de montage contribue à diminuer la masse de l'ensemble, ce qui est particulièrement appréciable dans un contexte d'application aéronautique.

Du fait de la disparition des cornières et stabilisateurs, certains problèmes liés à l'ajustement de ceux-ci, plus particulièrement liés à la tolérance de l'assemblage, se trouvent également réglés. Par rapport à un élément de structure à ailes pleines, la présence des ouvertures permet également de réduire la masse de l'ensemble.

Enfin, un autre avantage de l'invention est de permettre une fabrication à faible coût des cadres d'un fuselage d'aéronef, en particulier lorsque ceux-ci sont en matériau composite ou métallique. Il est en effet possible de fabriquer plusieurs éléments de structure ou cadres à partir d'une ébauche à plat. Ceci permet de simplifier la fabrication qui peut ainsi être réalisée en série.

En outre, et en particulier dans le cadre de fabrication en composite, il est possible d'imbriquer les préformes planes de base afin de limiter le taux de chute.

L'imbrication des préformes et la réduction de la masse de l'élément de structure sont particulièrement facilitées et efficaces lorsqu'au moins une ouverture d'une des deux ailes est destinée à recevoir au moins deux éléments traversants ayant une forme générale allongée suivant une direction transversale à la direction longitudinale de profilé. Ces éléments traversants, pouvant être des lisses, sont par exemple perpendiculaires à la direction longitudinale du profilé.

Dans un mode de réalisation particulier, au moins une des deux ailes s'étend sensiblement perpendiculairement à la direction longitudinale du profilé.

Afin de mieux stabiliser l'élément de structure et de faciliter l'accostage d'éléments tels que des traverses plancher dans une cabine d'aéronef, chaque aile comprend à l'extrémité libre de chaque jambe un pied qui s'étend dans un plan. Ce pied est destiné à être fixé sur la peau, du fuselage.

Plus précisément, le profilé est légèrement courbe de manière à ce que son rayon de courbure soit localement perpendiculaire au plan dans lequel s'étend le pied de chaque jambe.

De cette manière, l'élément de structure épouse la courbure de la peau de fuselage à laquelle il peut être fixé.

Dans un mode de réalisation, les jambes d'au moins une aile sont sensiblement perpendiculaires aux pieds.

Ainsi, une fois fixée sur la peau du fuselage, une des deux ailes est contenue dans un plan normal à l'axe longitudinal du fuselage.

Ceci permet là aussi de faciliter l'accostage d'éléments tels que les traverses plancher.

Dans un autre mode de réalisation ou en conjonction avec le précédent, les jambes d'au moins une aile forment un angle obtus par rapport au plan dans lequel s'étend le pied de chaque jambe. Un angle obtus d'une ou des deux jambes par rapport au plan des pieds, ou au plan de la peau, améliore la tenue au déversement de l'élément de structure.

Dans un mode de réalisation, l'élément de structure présente un profil général ou section transversale en oméga.

Selon un mode de réalisation, au moins une ouverture d'une des deux ailes est destinée à recevoir un seul élément traversant ayant une forme générale allongée suivant une direction transversale à la direction longitudinale du profilé (une seule lisse).

Ce mode de réalisation est particulièrement adapté aux zones de la structure devant être renforcées. Par exemple, l'autre aile ne comprend de jambes qu'aux endroits nécessaires pour empêcher le déversement.

Dans un mode plus particulier, les ouvertures de ladite au moins une aile dont les jambes sont sensiblement perpendiculaires aux pieds de l'aile sont destinées à recevoir chacune un seul élément traversant ayant une forme générale allongée suivant une direction transversale à la direction longitudinale du profilé.

Ainsi, l'aile perpendiculaire localement au plan du fuselage, la plus sujette au déversement, est moins évidée que la première aile et donc plus résistante.

Alternativement ou en conjonction avec ce mode, chacune des jambes est sensiblement perpendiculaire aux pieds de chaque aile.

Selon un autre mode de réalisation, les ouvertures de chaque aile sont destinées à recevoir chacune deux éléments traversants ayant une forme générale allongée suivant une direction transversale à la direction longitudinale du profilé.

Dans ce cas les ouvertures sont décalées d'une aile à l'autre selon une disposition dite « en quinconce ».

Ce mode de réalisation est particulièrement adapté aux zones faiblement chargées. Il permet en effet de limiter le nombre de fixations entre la peau et le cadre et, de ce fait, de réduire les coûts et le temps d'assemblage.

En outre, il permet grâce au grand nombre de zones évidées (ouvertures) un gain de masse substantiel.

Enfin, le fait que les ouvertures soient disposées en quinconce offre une plus grande accessibilité à l'intérieur de l'élément de structure ou cadre. Ceci permet de poser des fixations standard sur les ailes du cadre (attaches avec traverses planchers, jonctions de deux secteurs de cadre, réparation boulonnée, etc.) en évitant les fixations dites aveugles.

Selon une caractéristique possible, l'élément de structure est réalisé en matériau composite ou métallique.

L'élément de structure pouvant être réalisé en seulement une pièce et étant de forme simple, il est particulièrement adapté à une réalisation en composites.

Ainsi l'élément de structure peut être fabriqué à partir d'une préforme réalisée par tressage ou positionnement de fibres sèches multiaxiales et renforcé par des fibres unidirectionnelles (UD) placées selon la direction longitudinale du profilé.

Dans le cas où la structure à renforcer est un fuselage d'aéronef, l'élément de structure est par exemple réalisé à base de fibres de carbone, qui sont à la fois légères et résistantes. D'autres fibres aux propriétés comparables peuvent cependant être envisagées.

Alternativement, l'élément de structure est réalisé en titane ou en aluminium, ou tous autres métaux à la fois légers et résistants.

Selon une caractéristique possible, l'élément de structure de fuselage d'aéronef est réalisé à partir d'une seule préforme fibreuse.

Ceci est notamment le cas lorsque l'élément de structure est fabriqué par infusion de résine de préforme textile sèche Un avantage de ce principe est de pouvoir fabriquer plusieurs éléments de structure à partir d'une ébauche à plat en découpant chaque préforme d'élément de structure.

Cette méthode de fabrication est particulièrement efficace lorsque les ouvertures de chaque aile sont destinées à recevoir chacune deux lisses (ouvertures en quinconce).

En outre, par rapport à des ailes continues sans ouvertures, la mise en forme est simplifiée car les ouvertures facilitent la mise en forme (formage), en particulier lorsque des fibres continues sont utilisées.

Selon une caractéristique possible de l'invention, la hauteur de chaque aile varie le long de la direction longitudinale du profilé.

Plus particulièrement, il est possible de faire évoluer la section transversale de l'élément de structure pour s'adapter à une zone particulière de fuselage, y placer des éléments (câbles, fils, etc...), réduire localement sa masse ou l'inverse augmenter localement sa résistance. Par exemple, les ailes peuvent être localement allongées.

Selon une caractéristique possible de l'invention, l'épaisseur de l'élément varie le long de la direction longitudinale du profilé.

Plus particulièrement, il est possible d'adapter l'épaisseur et le drapage de différentes parties de l'élément de structure (base, ailes, jambes) pour localement augmenter sa résistance ou, à l'inverse, gagner en masse.

L'invention concerne également un procédé de fabrication d'un élément de structure de fuselage d'aéronef, comprenant une étape de formage sur un outillage d'une préforme initialement plane d'un élément de structure tel que brièvement exposé ci-dessus.

L'utilisation d'un tel procédé de fabrication facilite grandement la fabrication des éléments de structure selon l'invention par rapport aux mises en oeuvre des cadres à section en C ou en Z de l'art antérieur.

Il permet notamment d'envisager une fabrication en série d'éléments de structure.

Chaque aile de l'élément de structure comprenant à l'extrémité de chaque jambe un pied qui s'étend dans un plan, l'outillage peut présenter une courbure dont le rayon de courbure est perpendiculaire au plan défini par les première et deuxième directions longitudinales.

L'utilisation d'un tel procédé permet de fabriquer des portions de d'éléments de structure (cadres) de fuselage ou des éléments de structure de fuselage courbes et non plus seulement des portions d'éléments de structure de fuselage rectilignes (pas compris). Il est alors possible de limiter les jonctions entre portions de d'éléments de structure et de mieux répartir les efforts sur la longueur de l'élément de structure.

L'invention concerne également un aéronef comprenant un élément de structure tel que brièvement mentionné ci-dessus.

D'autres caractéristiques et avantages apparaitront au cours de la description qui va suivre, donnée à titre d'exemple non limitatif et faite en référence aux dessins annexés, sur lesquels :
- la figure 1 est une représentation schématique en perspective d'un élément de structure selon l'invention dans un premier mode de réalisation ;
- la figure 2a est une représentation schématique en perspective de l'élément de structure de la figure 1 fixé à une peau de structure de fuselage d'aéronef et traversé par des lisses de cette même structure ;
- la figure 2b est une représentation schématique en perspective de l'élément de structure de la figure 2a selon un angle de vue différent ;
- la figure 3a est une représentation schématique en perspective d'un élément de structure fixé à une peau de structure de fuselage d'aéronef traversé par des lisses de cette même structure dans un deuxième mode de réalisation selon l'invention ;
- la figure 3b est une représentation schématique en perspective de l'élément de structure de la figure 3a selon un angle de vue différent ;
- la figure 4 est une représentation schématique en perspective d'un élément de structure fixé à une peau de structure de fuselage d'aéronef traversé par des lisses de cette même structure dans un troisième mode de réalisation selon l'invention ;
- la figure 5 est une représentation schématique en perspective de l'élément de structure de la figure 4 avant sa mise en forme sur un outillage courbe ;
- la figure 6 est une représentation schématique en perspective de l'élément de structure de la figure 4 après sa mise en forme sur l'outillage de la figure 5 ;
- la figure 7 est une représentation schématique d'éléments de structure de la figure 4 avant leur mise en forme sur l'outillage de la figure 5.

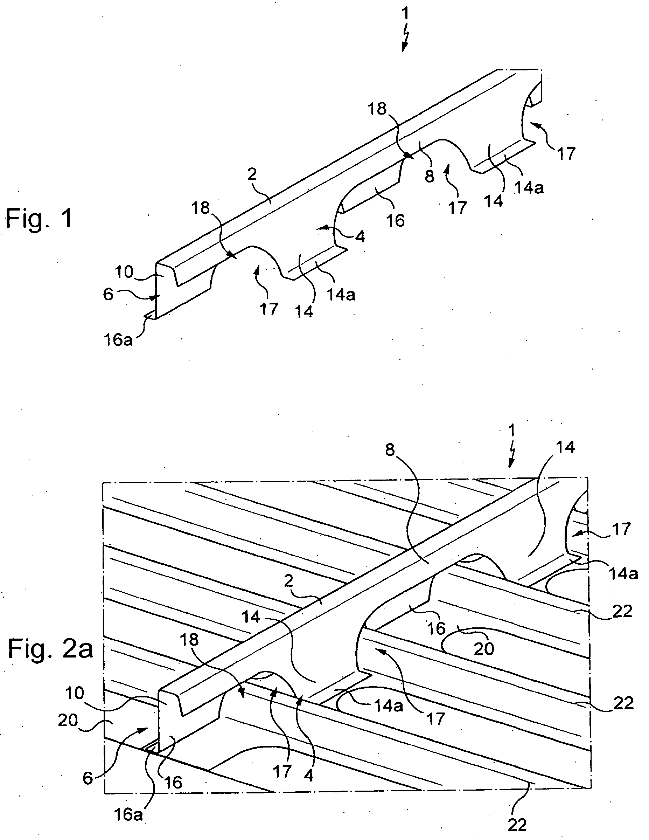

L'élément de structure 1 représenté à la figure 1, également appelé cadre, présente une forme générale de profilé allongé, s'étendant localement selon une direction longitudinale.

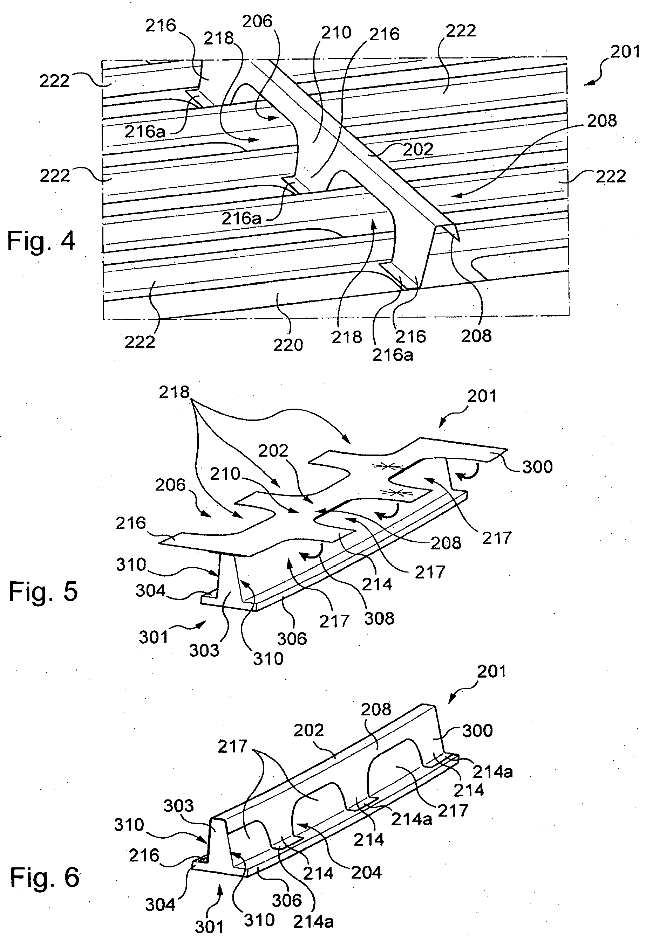

On remarquera que sur les figures 1 à 4, les éléments de structure présentés apparaissent comme étant droits, mais ils sont en réalité destinés à être légèrement courbes de manière à suivre la courbure de la peau du fuselage comme on le verra plus loin (voir notamment les figures 5 et 6).

L'élément de structure 1 comprend une base 2 (ou chapeau) localement sensiblement plane s'étendant selon cette direction longitudinale, de section transversale par exemple rectangulaire sur les figures 1 et suivantes.

On remarquera toutefois que pour certaines formes de profilé, par exemple convexes, la base n'est pas nécessairement présente, les ailes se rejoignant directement au sommet du profilé.

On notera également que la section du profilé peut varier en forme, et en épaisseur le long de la direction longitudinale.

La base 2 est montée sur une première aile 4 (à droite de la figure) et une deuxième aile 6 (à gauche de la figure).

Les première et deuxième ailes 4,6 comprennent respectivement chacune un premier et deuxième corps 8,10 directement reliés à la base 2 à ses extrémités qui sont opposées dans le sens de la largeur (direction transversale perpendiculaire à la direction longitudinale) et qui s'étendent sensiblement perpendiculairement à la base en s'éloignant de celle-ci.

Les corps 8, 10 s'étendent également, selon la direction longitudinale de l'élément de structure 1, de manière ininterrompue sur toute la longueur de la base 2.

Chaque aile 4,6 comprend également respectivement plusieurs jambes 14, 16 qui s'étendent, de façon régulière, respectivement à partir de chaque corps 8,10 selon une direction sensiblement perpendiculaire à celle de l'axe longitudinal de l'élément de structure 1.

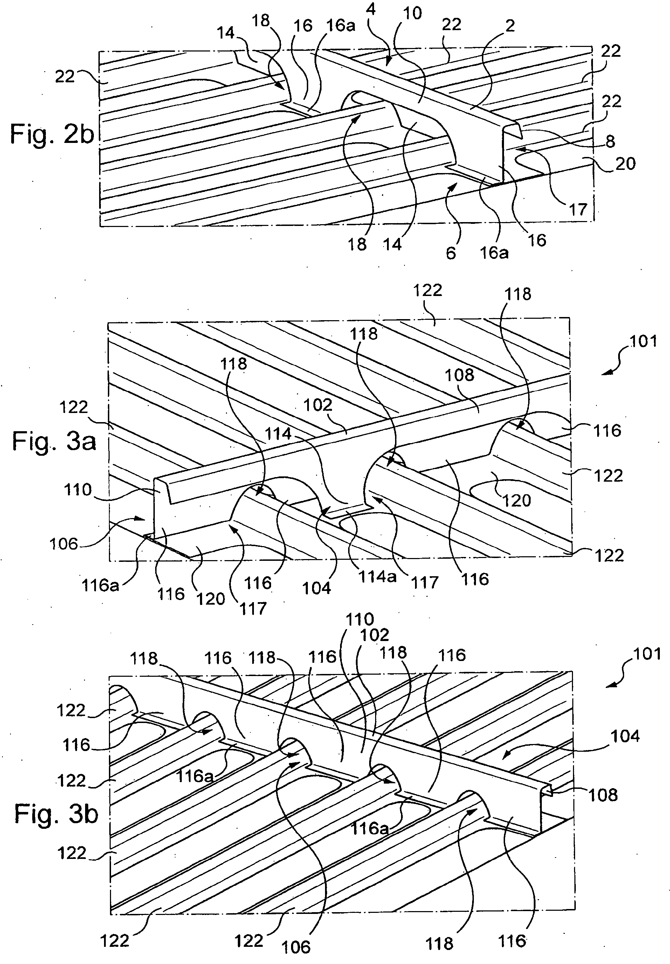

Plus particulièrement, dans le mode de réalisation particulier associé à cette figure 1 (ainsi qu'aux figures 2a et 2b), la deuxième aile 6 et la base 2 sont perpendiculaires entre elles, tandis que l'angle (en valeur absolue) formé entre la première aile 4 et la base est légèrement supérieur à 90°.

Les première et deuxième jambes 14,16 sont en forme d'équerre de manière à être en contact plan avec un autre élément de la structure de l'aéronef telle qu'une peau 20. Plus précisément, elles comprennent à leur extrémité libre des pieds 14a, 16a qui s'étendent dans le plan de la peau 20 et à laquelle ils sont fixés.

Les jambes sont respectivement réparties le long des corps 8,10 de manière à former respectivement entre elles des premières et deuxièmes ouvertures 17, 18.

Dans le mode de réalisation associé à la figure 1, chacune des premières ouvertures 17 de la première aile 4 s'étend le long du corps 8 entre deux jambes 14 consécutives, de manière à s'étendre en vis-à-vis d'une des deuxièmes jambes 16.

Plus précisément, les premières ouvertures 17 sont agencées longitudinalement de manière à ce que leur milieu se situe en face du milieu d'une deuxième jambe 16.

De même, chacune des deuxièmes ouvertures 18 de la deuxième aile 6 s'étend le long du corps 10 entre deux jambes 16, de manière à s'étendre en vis-à-vis d'une première jambe 14.

Plus précisément, chaque deuxième ouverture 18 est agencée longitudinalement de manière à ce que son milieu se situe en face du milieu d'une première jambe 14.

Les ouvertures 17, 18 sont donc décalées longitudinalement d'une aile à l'autre selon une disposition dite « en quinconce ».

De cette manière, une partie de chaque ouverture 17 se trouve en face d'une partie de chaque ouverture 18, ceci pour permettre, comme on le verra plus loin, le passage de lisses dans une structure de fuselage d'aéronef.

De préférence, les pièces constitutives de l'élément de structure 1 sont réalisées en matériaux composites. Par exemple, la base 2 est renforcée par des fibres unidirectionnelles de carbone s'étendant le long de sa direction longitudinale.

Alternativement, l'élément de structure 1 est réalisé en matériaux métalliques tels que de l'aluminium.

Quelque soit le matériau utilisé, les éléments constitutifs de l'élément de structure 1 permettent de le rendre particulièrement résistant aux efforts de torsion et de flexion. En effet, l'élément de structure 1 peut, s'appuyer sur une autre partie de la structure de fuselage d'aéronef telle qu'une peau à travers les jambes 14,16.

L'élément de structure 1 est donc moins sujet au déversement. Ainsi, il est possible de se passer des stabilisateurs et des cornières de l'art antérieur, dont la fonction est avantageusement exercée par la forme en équerre des jambes 14, 16.

On va maintenant décrire l'intégration de l'élément de structure 1 dans une structure environnante de fuselage d'aéronef en référence aux figures 2a et 2b. Ces dernières illustrent, selon deux angles différents, le positionnement de l'élément de structure 1 sur une peau 20 à laquelle sont fixées des lisses 22.

On notera que sur ces figures et les suivantes, la peau 20 est localement plane mais qu'elle est globalement courbe pour réaliser un fuselage.

Ainsi, la base 2 suit cette courbure, son rayon de courbure étant localement perpendiculaire au plan de peau 20.

Les lisses 22, constituées de profilés ici à section en oméga (d'autres sections en 1, en C ou en T sont également envisageables) s'étendent selon une direction longitudinale différente de la direction longitudinale de l'élément de structure 1. Cette direction correspond en général à celle de l'axe longitudinal du fuselage. Dans ce qui suit on qualifiera de première direction longitudinale, la direction de chaque lisse et de deuxième direction longitudinale la direction longitudinale de l'élément de structure.

En l'occurrence, l'élément de structure 1 est placé de manière à ce que les première et deuxième directions soient sensiblement perpendiculaires entre elles, bien que d'autres angles puissent convenir.

De ce fait, la première direction longitudinale, ou direction d'extension des lisses, est normale au plan contenant la deuxième aile 6.

En outre, l'élément de structure 1 est placé de manière à ce que les ouvertures 17,18 permettent le passage des lisses 22 à travers celles-ci.

Ainsi, chaque lisse 22 passe, le long de la deuxième direction longitudinalement, d'une part, par une ouverture 17, et, d'autre part, par une ouverture 18.

Ici, la longueur de chaque première et deuxième ouverture 17, 18 prise suivant la deuxième direction longitudinale est avantageusement choisie de manière à pouvoir faire passer (ou enjamber) deux lisses 22.

De plus, leur forme est réalisée à la façon de trous de souris pour s'adapter au contour de la section transversale des lisses 22.

Chacune des premières et deuxièmes jambes 14, 16 est en contact plan avec la peau 20 de par la forme en équerre. Les pieds 14a, 16a sont par exemple fixés par collage, vissage ou soudage selon la nature du matériau dans lequel est réalisé l'élément de structure.

La structure en quinconce de l'élément de structure 1 permet de diminuer le nombre de ses fixations et, de ce fait, la durée et le coût de l'assemblage sur la peau 20.

Par ailleurs, par rapport à une structure classique en oméga sans ouvertures (structure à ailes pleines), on obtient un gain de masse substantiel.

Ce mode de réalisation est donc bien adapté aux zones faiblement chargées.

Enfin, l'orientation particulière de la deuxième aile 6 permet de faciliter l'accostage d'éléments tels que les traverses plancher.

Les figures 3a et 3b illustrent, selon deux angles différents, un deuxième mode de réalisation selon l'invention.

Dans celui-ci, un élément de structure 101 comprend toujours une base 102 représentée plane mais destinée à épouser globalement la structure du fuselage. A ses extrémités s'étendent vers le bas des première et deuxième ailes 104, 106 comprenant respectivement des corps 108, 110 qui s'étendent sans interruption le long de la direction longitudinale de l'élément de structure 101.

La première aile 104 reste inchangée par rapport à la première aile 14 du premier mode de réalisation. Elle comprend le même nombre et la même disposition de jambes 114 et d'ouvertures 117. Les jambes 114 s'étendent toujours à partir de l'aile correspondante selon un angle légèrement supérieur à 90° et sont fixées à la peau 120 par contact plan des pieds 114a.

La deuxième aile 106, quant à elle, s'étend comme dans le premier mode de réalisation perpendiculairement à la base 102.

En revanche, comme on le voit sur la figure 3b, elle comprend un nombre plus important de jambes 116 et de pieds 116a, de manière à former des ouvertures 118 permettant de faire passer chacune une lisse 122 fixée à la peau 120.

Pour cela, les ouvertures 118 sont découpées à la façon de trous de souris pour s'adapter au contour de chaque lisse 122.

Ainsi, chaque ouverture 117 se trouve en face de deux ouvertures 118.

Ce deuxième mode de réalisation permet d'augmenter la résistance au déversement de l'élément 101. Il est particulièrement adapté aux zones du fuselage plus chargées.

Dans une variante (non représentée) de ce mode de réalisation, la première aile 104 ne comprend localement des jambes 114 qu'aux endroits permettant d'empêcher le déversement de l'élément en fonction des contraintes locales.

La figure 4 illustre un troisième mode de réalisation selon l'invention.

Dans celui-ci, un élément de structure 201 comprend toujours une base 202 représentée plane mais destinée à épouser globalement la structure du fuselage. A ses extrémités s'étendent des première et deuxième ailes 204, 206 comprenant respectivement des corps 208, 210 qui s'étendent sans interruption le long de la direction longitudinale de l'élément de structure 201.

La première aile 204 (non visible sur la figure 4) reste inchangée par rapport à la première aile 4 du premier mode de réalisation. Elle comprend le même nombre et la même disposition de jambes 214 et d'ouvertures 217. Les jambes 214 s'étendent toujours à partir de l'aile correspondante selon un angle légèrement supérieur à 90° et sont fixées à une peau 220 par contact plan des pieds 214a.

La deuxième aile 206, quant à elle, s'étend à partir de la base 202 selon le même angle (en valeur absolue) que la première aile 204 et est fixée par les pieds 216a des jambes 216 à la peau 220. L'élément de structure 201 a donc une section transversale générale en forme de oméga.

Les premières et deuxièmes jambes 214, 216 et les premières et deuxièmes ouvertures 217, 218 sont disposées, comme dans le premier mode de réalisation, de manière à pouvoir faire passer dans chaque ouverture deux lisses 222 fixées à la peau 220. On retrouve ci la disposition « en quinconce » des figures 2a, 2b.

L'avantage de la section générale en oméga est d'améliorer de façon alternative la tenue au déversement de l'élément de structure 201. Dans un quatrième mode de réalisation non représenté, les ailes sont disposées en oméga, et l'une d'entre elles comprend un nombre d'ouvertures permettant de faire passer chacune une seule lisse.

Dans d'autres modes de réalisation possibles mais non représentés, les ouvertures ne sont pas disposées de façon régulière, ou encore peuvent accueillir un nombre plus important de lisses.

On va maintenant décrire un procédé de fabrication des éléments de structure de fuselage selon l'invention en référence aux figures 5 et 6.

Ce procédé concerne en particulier les matériaux composites (thermodurcissables, thermoplastiques ou à partir de textiles) ou encore les matériaux métalliques et les fibres de métal stratifiées (« fiber métal laminate » en terminologie anglo-saxonne).

Dans le cas d'un matériau composite fabriqué par infusion de résine, en particulier de résine de préforme textile sèche, l'élément de structure ou cadre est réalisé à partir d'une seule préforme fibreuse initialement plane (on ne détaillera pas ici sa fabrication, qui est connue en elle-même).

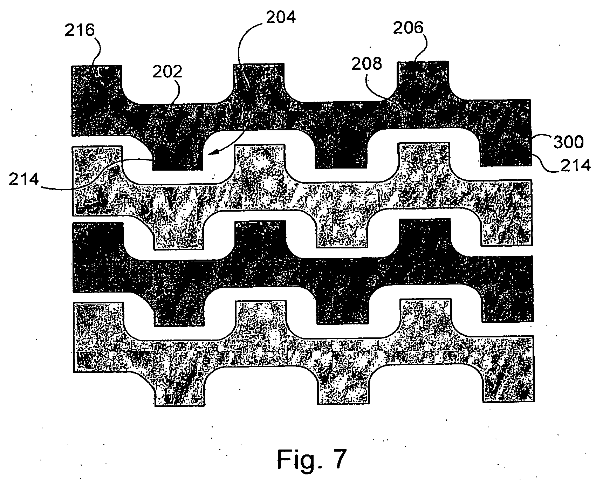

Une telle préforme ou ébauche est numérotée 300 sur les figures 5 et 6. Cette dernière est plane et découpée à partir d'une forme initiale généralement rectangulaire selon la forme et l'agencement désirés pour les jambes et les ouvertures comme on peut le voir sur la figure 7.

En l'occurrence, la préforme 300 permet d'obtenir un élément de structure selon n'importe quel mode de réalisation présentant des ouvertures disposées « en quinconce » et permettant le passage de deux lisses, comme par exemple le premier ou le deuxième modes illustrés aux figures 1, 2a, 2b, et 4.

Toutefois, compte tenu de la forme de l'outillage 301, l'élément de structure obtenu sera conforme au troisième mode de réalisation (figure 4). On reprendra donc la même numérotation que dans cette figure.

Ainsi, la préforme 300 présente une base 202, et des corps 208, 210 et des première et deuxième ailes 204, 206 initialement contenus dans le même plan. On remarquera à cet effet que l'on peut réaliser plusieurs préformes à partir d'un rectangle découpé en imbriquant les ailes d'une préforme dans les ouvertures d'une autre, comme on peut le voir sur la figure 7. Ceci a pour avantage de minimiser les chutes de matière.

La préforme 300 est disposée sur l'outillage 301 qui présente une légère courbure le long de sa direction longitudinale de manière à épouser localement la circonférence d'un fuselage d'aéronef.

Plus précisément, le rayon de courbure de l'outillage 301 est perpendiculaire au plan de la peau 220 sur laquelle sera placé l'élément de structure 201, soit perpendiculaire au plan formé par les première et deuxième directions longitudinales.

La section transversale de l'outillage 301 est adaptée à l'écartement et à l'orientation par rapport à la base 202 des première et deuxième ailes 204, 206 que l'on désire obtenir par formage sur l'outillage.

Ici, l'outillage 301 comprend un corps plein 303 en forme de trapèze régulier ainsi que deux semelles gauche et droite 304, 306. Elles s'étendent respectivement à gauche et à droite à partir de la base inférieure du trapèze de manière perpendiculaire à celui-ci. L'outillage possède ainsi une section générale en oméga.

Un procédé selon de l'invention prévoit de draper la préforme 300 sur l'outillage 301 dans le sens des flèches 308. On pose ainsi la préforme plane 300 sur la base de l'outillage (base supérieure du trapèze) et, à l'aide d'un outil non représenté (matrice...), on presse fortement sur la base 202 afin qu'elle épouse la courbure de l'outillage et on rabat les jambes 204, 206 (ou pattes) par pliage contre les flancs latéraux 310 et les semelles 304, 306 de l'outillage. La figure 6 illustre la préforme 300 après drapage.

A titre d'exemple, dans le cas d'une préforme à fibres orientées à 0°, 45°, -45° et 90°, les fibres orientées à 0° sont alignées sur la direction longitudinale de la préforme 300.

Une telle opération était rendue difficile, voire impossible (dans le cas de plis à 0° dans la base), dans l'art antérieur où la largeur des ailes et des jambes de l'élément de structure était trop importante et engendrait des problèmes de drapage liés à la mise en forme de fibres continues.

Grâce aux dispositions de l'invention, les fibres sont faiblement désorientées par l'effort de pliage car la présence des ouvertures 217, 218 sur chaque aile facilite le drapage. La disposition « en quinconce » est à cet égard particulièrement favorable.

Le drapage sur un outillage courbe présente l'avantage de pouvoir envisager des éléments de structure plus longs car épousant la forme locale du fuselage.

Ceci limite le nombre de fixations à prévoir entre les éléments formant les cadres de fuselage, et par voie de conséquence, les temps et les coûts de fabrication ou de maintenance.

En outre, la simplicité du procédé permet d'envisager une fabrication en série.

L'épaisseur localement plus importante de la base 202 et des corps 208, 210 permet de renforcer localement l'élément de structure 201.

Dans d'autres modes de réalisation non représentés, il est possible d'envisager une préforme d'épaisseur uniforme, ou au contraire de prévoir que les ailes ou les jambes soient plus épaisses que la base et les corps.

Ces choix dépendent notamment de la zone où sera placé l'élément de structure, selon qu'il doive être plus résistant ou plus léger.

On remarquera également que la forme de l'outillage varie en fonction de l'écartement des ailes que l'on désire obtenir. Ainsi, par exemple, pour obtenir l'élément de structure des figures 1, 2a et 2b, le flanc gauche du coeur de l'outillage 303 sera perpendiculaire à la semelle 304.

Le nombre de jambes et la forme des ouvertures ne dépendent, quant à eux, que de la forme de la préforme 300. Quelle que soit cette dernière, l'étape de pliage reste la même.

On notera que l'un quelconque des éléments de structure des figures précédentes et des modes de réalisation et variantes non représentés peut être fabriqué par conformage selon le procédé qui vient d'être décrit en référence aux figures 5 et 6.

## Revendications

1. Elément de structure de fuselage d'aéronef, ledit élément de structure ayant une forme générale de profilé allongé suivant une direction longitudinale et comprenant deux ailes (4, 6 ; 104, 106 ; 204, 206), chaque aile comprenant une partie (8, 10; 108, 110; 208, 210) s'étendant de manière ininterrompue sur toute la longueur du profilé, **caractérisé en ce que** chaque aile comprend des jambes (14, 16 ; 114, 116 ; 214, 216) espacées les unes des autres qui s'étendent à partir de cette partie ininterrompue de manière à définir une ouverture (17, 18 ; 117, 118 ; 217, 218) entre deux jambes consécutives, l'une des jambes d'une aile étant disposée en vis-à-vis d'au moins une partie de l'ouverture définie entre deux jambes consécutives de l'autre aile.

2. Elément de structure de fuselage d'aéronef selon la revendication 1, **caractérisé en ce qu'**au moins une des deux ailes (4, 6 ; 104, 106 ; 204, 206) s'étend sensiblement perpendiculairement à la direction longitudinale du profilé.

3. Elément de structure de fuselage d'aéronef selon la revendication 1 ou 2, **caractérisé en ce qu'**au moins une ouverture (17, 18 ; 117 ; 217, 218) d'une des deux ailes (4, 6 ; 104 ; 204, 206) est destinée à recevoir au moins deux éléments traversants (22) ayant une forme générale allongée suivant une direction transversale à la direction longitudinale du profilé.

4. Elément de structure de fuselage d'aéronef selon l'une des revendications 1 à 3, **caractérisé en ce que** les ouvertures (17, 18 ; 117 ; 217, 218) de chaque aile (4, 6 ; 104 ; 204, 206) sont destinées à recevoir chacune deux éléments traversants (22) ayant une forme générale allongée suivant une direction transversale à la direction longitudinale du profilé.

5. Elément de structure de fuselage d'aéronef selon l'une des revendications 1 à 3, **caractérisé en ce qu'**au moins une ouverture (118) d'une des deux ailes (106) est destinée à recevoir un seul élément traversant (22) ayant une forme générale allongée suivant une direction transversale à la direction longitudinale du profilé.

6. Elément de structure de fuselage d'aéronef selon l'une des revendications 1 à 5, **caractérisé en ce que** chaque aile (4, 6 ; 104, 106 ; 204, 206) comprend à l'extrémité libre de chaque jambe (14, 16 ; 114, 116 ; 214, 216) un pied (14a, 16a ; 114a, 116a ; 214a, 216a) qui s'étend dans un plan (20, 120, 220).

7. Elément de structure de fuselage d'aéronef selon la revendication 6, **caractérisé en ce que** le profilé est légèrement courbe de manière à ce que son rayon de courbure soit localement perpendiculaire au plan (20, 120, 220) dans lequel s'étend le pied (14a, 16a ; 114a, 116a ; 214a, 216a) de chaque jambe (14, 16 ; 114, 116 ; 214, 216).

8. Elément de structure de fuselage d'aéronef selon la revendication 6 ou 7, **caractérisé en ce que** les jambes (16 ; 116) d'au moins une aile (6 ; 106) sont sensiblement perpendiculaires aux pieds (16a ; 116a) de l'aile.

9. Elément de structure de fuselage d'aéronef selon la revendication 8, **caractérisé en ce que** les ouvertures (118) de ladite au moins une aile (106) dont les jambes (116) sont sensiblement perpendiculaires aux pieds (116a) de l'aile sont destinées à recevoir chacune un seul élément traversant (22) ayant une forme générale allongée suivant une direction transversale à la direction longitudinale du profilé.

10. Elément de structure de fuselage d'aéronef selon l'une des revendications 5 à 8, **caractérisé en ce que** les jambes (14 ; 114 ; 214, 216) d'au moins une aile (4 ; 104 ; 204, 206) forment un angle obtus par rapport au plan (20 ; 120 ; 220) dans lequel s'étend le pied (14a ; 114a ; 214a, 216a) de chaque jambe.

11. Elément de structure de fuselage d'aéronef selon l'une des revendications 5 à 8, **caractérisé en ce que** chacune des jambes (16 ; 116) des ailes (6; 106) est sensiblement perpendiculaire aux pieds (16a; 116a) de chaque aile.

12. Elément de structure de fuselage d'aéronef selon l'une des revendications 1 à 11, **caractérisé en ce que** la hauteur de chaque aile (4, 6 ; 104, 106 ; 204, 206) varie le long de la direction longitudinale du profilé.

13. Elément de structure de fuselage d'aéronef selon l'une des revendications 1 à 12, **caractérisé en ce que** l'épaisseur de l'élément (1 ; 101 ; 201) varie le long de la direction longitudinale du profilé.

14. Procédé de fabrication d'un élément de structure de fuselage d'aéronef selon l'une des revendications 1 à 13, **caractérisé en ce qu'**il comprend une étape de formage sur un outillage (301) d'une préforme (300) plane de l'élément de structure.

15. Procédé selon la revendication 14, **caractérisé en ce que** chaque aile (4, 6 ; 104, 106 ; 204, 206) de l'élément de structure de fuselage d'aéronef comprend à l'extrémité libre de chaque jambe (14, 16 ; 114, 116 ; 214, 216) un pied (14a, 16a ; 114a, 116a ; 214a, 216a) qui s'étend dans un plan (20 ; 120 : 220), l'outillage (301) présentant une courbure dont le rayon de courbure est perpendiculaire audit plan.

16. Aéronef comprenant un élément de structure de fuselage d'aéronef selon l'une des revendications 1 à 13.

## Patentansprüche

1. Strukturelement eines Flugzeugrumpfes, wobei das Strukturelement eine allgemeine Form eines Profilteils aufweist, das in einer Längsrichtung lang gestreckt ist und zwei Schenkel (4, 6; 104, 106; 204, 206) aufweist, wobei jeder Schenkel einen Teil (8, 10; 108, 110; 208, 210) aufweist, der sich durchgehend über die gesamte Länge des Profilteils erstreckt, **dadurch gekennzeichnet, dass** jeder Schenkel voneinander beabstandete Beine (14, 16; 114, 116; 214, 216) aufweist, welche sich von diesem durchgehenden Teil aus erstrecken, derart, dass eine Öffnung (17, 18; 117, 118; 217, 218) zwischen zwei aufeinanderfolgenden Beinen definiert wird, wobei eines der Beine eines Schenkels gegenüber wenigstens einem Teil der Öffnung angeordnet ist, die zwischen zwei aufeinanderfolgenden Beinen des anderen Schenkels definiert ist.

2. Strukturelement eines Flugzeugrumpfes nach Anspruch 1, **dadurch gekennzeichnet, dass** sich wenigstens einer der zwei Schenkel (4, 6; 104, 106; 204, 206) im Wesentlichen senkrecht zur Längsrichtung des Profilteils erstreckt.

3. Strukturelement eines Flugzeugrumpfes nach Anspruch 1 oder 2, **dadurch gekennzeichnet, dass** wenigstens eine Öffnung (17, 18; 117; 217, 218) eines der zwei Schenkel (4, 6; 104; 204, 206) dazu bestimmt ist, wenigstens zwei durchquerende Elemente (22) aufzunehmen, die eine lang gestreckte allgemeine Form entlang einer quer zur Längsrichtung des Profilteils verlaufenden Richtung aufweisen.

4. Strukturelement eines Flugzeugrumpfes nach einem der Ansprüche 1 bis 3, **dadurch gekennzeichnet, dass** die Öffnungen (17, 18; 117; 217, 218) jedes Schenkels (4, 6; 104; 204, 206) dazu bestimmt sind, jeweils zwei durchquerende Elemente (22) aufzunehmen, die eine lang gestreckte allgemeine Form entlang einer quer zur Längsrichtung des Profilteils verlaufenden Richtung aufweisen.

5. Strukturelement eines Flugzeugrumpfes nach einem der Ansprüche 1 bis 3, **dadurch gekennzeichnet, dass** wenigstens eine Öffnung (118) eines der zwei Schenkel (106) dazu bestimmt ist, ein einziges durchquerendes Element (22) aufzunehmen, das eine lang gestreckte allgemeine Form entlang einer quer zur Längsrichtung des Profilteils verlaufenden Richtung aufweist.

6. Strukturelement eines Flugzeugrumpfes nach einem der Ansprüche 1 bis 5, **dadurch gekennzeichnet, dass** jeder Schenkel (4, 6; 104, 106; 204, 206) am freien Ende jedes Beins (14, 16; 114, 116; 214, 216) einen Fuß (14a, 16a; 114a, 116a; 214a, 216a) aufweist, welcher sich in einer Ebene (20, 120, 220) erstreckt.

7. Strukturelement eines Flugzeugrumpfes nach Anspruch 6, **dadurch gekennzeichnet, dass** das Profilteil leicht gekrümmt ist, derart, dass sein Krümmungsradius lokal senkrecht zu der Ebene (20, 120, 220) ist, in welcher sich der Fuß (14a, 16a; 114a, 116a; 214a, 216a) jedes Beins (14, 16; 114, 116; 214, 216) erstreckt.

8. Strukturelement eines Flugzeugrumpfes nach Anspruch 6 oder 7, **dadurch gekennzeichnet, dass** die Beine (16; 116) wenigstens eines Schenkels (6; 106) im Wesentlichen senkrecht zu den Füßen (16a; 116a) des Schenkels sind.

9. Strukturelement eines Flugzeugrumpfes nach Anspruch 8, **dadurch gekennzeichnet, dass** die Öffnungen (118) des wenigstens einen Schenkels (106), dessen Beine (116) im Wesentlichen senkrecht zu den Füßen (116a) des Schenkels sind, dazu bestimmt sind, jeweils ein einziges durchquerendes Element (22) aufzunehmen, das eine lang gestreckte allgemeine Form entlang einer quer zur Längsrichtung des Profilteils verlaufenden Richtung aufweist.

10. Strukturelement eines Flugzeugrumpfes nach einem der Ansprüche 5 bis 8, **dadurch gekennzeichnet, dass** die Beine (14; 114; 214, 216) wenigstens eines Schenkels (4; 104; 204, 206) einen stumpfen Winkel bezüglich der Ebene (20; 120; 220) bilden, in welcher sich der Fuß (14a; 114a; 214a, 216a) jedes Beins erstreckt.

11. Strukturelement eines Flugzeugrumpfes nach einem der Ansprüche 5 bis 8, **dadurch gekennzeichnet, dass** jedes der Beine (16; 116) der Schenkel (6; 106) im Wesentlichen senkrecht zu den Füßen (16a; 116a) jedes Schenkels ist.

12. Strukturelement eines Flugzeugrumpfes nach einem der Ansprüche 1 bis 11, **dadurch gekennzeichnet, dass** die Höhe jedes Schenkels (4, 6; 104, 106; 204, 206) entlang der Längsrichtung des Profilteils variiert.

13. Strukturelement eines Flugzeugrumpfes nach einem der Ansprüche 1 bis 12, **dadurch gekennzeichnet, dass** die Dicke des Elements (1; 101; 201) entlang der Längsrichtung des Profilteils variiert.

14. Verfahren zur Herstellung eines Strukturelements eines Flugzeugrumpfes nach einem der Ansprüche 1 bis 13, **dadurch gekennzeichnet, dass** es einen Schritt der Verformung einer ebenen Vorform (300) des Strukturelements auf einem Werkzeug (301) aufweist.

15. Verfahren nach Anspruch 14, **dadurch gekennzeichnet, dass** jeder Schenkel (4, 6; 104, 106; 204, 206) des Strukturelements eines Flugzeugrumpfes am freien Ende jedes Beins (14, 16; 114, 116; 214, 216) einen Fuß (14a, 16a; 114a, 116a; 214a, 216a) aufweist, welcher sich in einer Ebene (20; 120; 220) erstreckt, wobei das Werkzeug (301) eine Krümmung aufweist, deren Krümmungsradius senkrecht zu dieser Ebene ist.

16. Flugzeug, welches ein Strukturelement eines Flugzeugrumpfes nach einem der Ansprüche 1 bis 13 aufweist.

## Claims

1. Structural element for an aircraft fuselage, said structural element being in the general shape of a profile which is elongate in a longitudinal direction and comprising two wings (4, 6; 104, 106; 204, 206), each wing comprising a part (8, 10; 108, 110; 208, 210) which extends uninterrupted over the entire length of the profile **characterised in that** each wing comprises legs (14, 16; 114, 116; 214, 216) which are spaced apart from one another and extend from this uninterrupted part so as to define an opening (17, 18; 117, 118; 217, 218) between two consecutive legs, one of the legs of a wing being arranged opposite at least part of the opening defined between two consecutive legs of the other wing.

2. Structural element for an aircraft fuselage according to claim 1, **characterised in that** at least one of the two wings (4, 6; 104, 106; 204, 206) extends substantially perpendicular to the longitudinal direction of the profile.

3. Structural element for an aircraft fuselage according to claim 1 or 2, **characterised in that** at least one opening (17, 18; 117; 217, 218) of one of the two wings (4, 6; 104; 204, 206) is intended to receive at least two through elements (22) of elongate general shape in a direction transverse to the longitudinal direction of the profile.

4. Structural element for an aircraft fuselage according to one of claims 1 to 3, **characterised in that** the openings (17, 18; 117; 217, 218) of each wing (4, 6; 104; 204, 206) are intended to each receive two through elements (22) of elongate general shape in a direction transverse to the longitudinal direction of the profile.

5. Structural element for an aircraft fuselage according to one of claims 1 to 3, **characterised in that** at least one opening (118) of one of the two wings (106) is intended to receive a single through element (22) of elongate general shape in a direction transverse to the longitudinal direction of the profile.

6. Structural element for an aircraft fuselage according to one of claims 1 to 5, **characterised in that** each wing (4, 6; 104, 106; 204, 206) comprises, at the free end of each leg (14, 16; 114, 116; 214, 216), a foot (14a, 16a; 114a, 116a; 214a, 216a) which extends in a plane (20, 120, 220).

7. Structural element for an aircraft fuselage according to claim 6, **characterised in that** the profile is slightly curved such that its radius of curvature is locally perpendicular to the plane (20, 120, 220) in which extends the foot (14a, 16a; 114a, 116a; 214a, 216a) of each leg (14, 16; 114, 116; 214, 216).

8. Structural element for an aircraft fuselage according to claim 6 or 7, **characterised in that** the legs (16; 116) of at least one wing (6; 106) are substantially perpendicular to the feet (16a; 116a) of the wing.

9. Structural element for an aircraft fuselage according to claim 8, **characterised in that** the openings (118) of said at least one wing (106) whose legs (116) are substantially perpendicular to the feet (116a) of the wing are intended to each receive a single through element (22) of elongate general shape in a direction transverse to the longitudinal direction of the profile.

10. Structural element for an aircraft fuselage according to one of claims 5 to 8, **characterised in that** the legs (14; 114; 214, 216) of at least one wing (4; 104; 204, 206) form an obtuse angle with respect to the plane (20; 120; 220) in which extends the foot (14a; 114a; 214a, 216a) of each leg.

11. Structural element for an aircraft fuselage according to one of claims 5 to 8, **characterised in that** each of the legs (16; 116) of the wings (6; 106) is substantially perpendicular to the feet (16a; 116a) of each wing.

12. Structural element for an aircraft fuselage according to one of claims 1 to 11, **characterised in that** the height of each wing (4, 6; 104, 106; 204, 206) varies along the longitudinal direction of the profile.

13. Structural element for an aircraft fuselage according to one of claims 1 to 12, **characterised in that** the thickness of the element (1; 101; 201) varies along the longitudinal direction of the profile.

14. Method for manufacturing a structural element for an aircraft fuselage according to one of claims 1 to 13, **characterised in that** it comprises a step of forming, on a tooling (301), a flat preform (300) of the structural element.

15. Method according to claim 14, **characterised in that** each wing (4, 6; 104, 106; 204, 206) of the structural element for an aircraft fuselage comprises, at the free end of each leg (14, 16; 114, 116; 214, 216), a foot (14a, 16a; 114a, 116a; 214a, 216a) which extends in a plane (20; 120; 220), the tooling (301) having a curvature whose radius of curvature is perpendicular to said plane.

16. Aircraft comprising a structural element for an aircraft fuselage according to one of claims 1 to 13.
